# EUROPÄISCHE PATENTSCHRIFT

(11) **EP 4 522 399 B1**
(45) Veröffentlichungstag und Bekanntmachung des Hinweises auf die Patenterteilung: **08.10.2025**
(21) Anmeldenummer: 24708807.3
(22) Anmeldetag: 01.03.2024
(51) Int. Cl.: B29C 45/14, B29C 65/70, B29C 41/04, B29C 41/20, B29K 67/00, B29K 77/00, B29K 677/00

(54) **HERSTELLUNGSVERFAHREN FÜR EIN FORMTEIL**
METHOD FOR PRODUCING A MOLDED PART
PROCÉDÉ DE FABRICATION D'UNE PIÈCE MOULÉE

(30) Priorität: 14.03.2023 DE 102023106355
(43) Veröffentlichungstag der Anmeldung: 19.03.2025
(73) Patentinhaber: Elkamet Kunststofftechnik GmbH, 35216 Biedenkopf (DE)
(72) Erfinder: EMRICH, Marco, 35327 Ulrichstein (DE); NEEBE, Martin, 35260 Stadtallendorf (DE)
(74) Vertreter: Keil & Schaafhausen Patentanwälte PartGmbB
(86) Internationale Anmeldenummer: PCT/EP2024/055459
(87) Internationale Veröffentlichungsnummer: WO 2024/188670

(56) Entgegenhaltungen:
- EP-B1- 2 818 297
- DE-A1- 102011 009 748
- DE-A1- 102014 106 998
- DE-A1- 102017 130 747

## Beschreibung

Die Erfindung betrifft ein Verfahren zur Herstellung eines ein vorgefertigtes Einsetzteil und einen an das Einsetzteil angeformten Formteilabschnitt aufweisenden Formteils, wobei das vorgefertigte Einsetzteils einen ein erstes Polyamidmaterial umfassenden Anbindungsbereich aufweist, wobei das Formteil erstellt wird durch Bereitstellen einer zumindest ein erstes Lactammonomer enthaltenden polymerisationsfähigen Kunststoffvorläufermischung zur Herstellung eines zweiten Polyamidmaterials, durch Einfüllen der Kunststoffvorläufermischung in ein Formwerkzeug, durch Erwärmen der Kunststoffvorläufermischung auf eine Starttemperatur Tₛ und durch Polymerisation der Kunststoffvorläufermischung bei oder oberhalb der Starttemperatur Tₛ in dem Formwerkzeug unter Bildung des zweiten Polyamidmaterials und Formung des Formteilabschnitts, wobei eine Innenkontur des Formwerkzeugs eine Außenkontur des Formteilabschnitts bestimmt.

Aus der EP 2 818 297 B1 ist ein Verfahren zur Herstellung von Formteilen mit einem Einlegelement bekannt. Bei diesem Einlegelement handelt es sich um eine Polyamidbasierte Verstärkungsstruktur, welche dort lokal zu einer Stabilisierung in dem entsprechenden Formteil führt. Das Herstellungsverfahren basiert auf Spritzguss.

Der DE 10 2011 009 748 A1 beschreibt ebenfalls ein Herstellungsverfahren von mehrschichtigen Kunststoffbauteilen, das als Rotationsschmelzverfahren ausgestaltet sein kann. Das Verfahren beruht auf einer zweistufigen Verfahrensführung: Zunächst wird eine Polymerschicht durch eine anionische Polymerisation eines ersten Polymerstartgemischs unter Schutzgas erzeugt. Anschließend wird auf der Grenzfläche dieser Polymerschicht ein zweites Polymerstartgemisch zusammen mit einem co-polymerisierbaren Schlagzähmodifikator aufgebracht und polymerisiert. Dieses Verfahren betrifft jedoch keine Integration eines vorgefertigten Einsetzteils.

Aus der DE 10 2014 106 998 A1 ist ein Rotationsschmelzverfahren bekannt, bei dem eine andere Form eines Einlegeelement in die Rotationsschmelzform eingebracht wird. Dieses Einlegeelement ist kein mechanisch definiertes Bauteil wie eine Strebe, sondern ein tränkbares oder saugfähiges Material. Dieses Material nimmt die als Schmelze vorliegende Kunststoffverbindung lokal auf, wodurch es zu einer gezielten und lokal definierten Wandstärkeerhöhung im Formteil kommt.

Die Druckschrift DE 10 2017 130 747 A1 beschreibt ein Rotationsschmelzverfahren zur Herstellung eines Formteils, in das eine vorgefertigte Strebe eingearbeitet wird. Hierbei wird die Strebe in eine Rotationsschmelzform eingesetzt und fixiert, wobei sie an ihrem ersten und zweiten Ende an der Innenwandung der Form anliegt oder nahezu anliegt. Der besondere Aspekt der D1 liegt darin, dass die Rotationsschmelzform einen Vorsprung in einem Verbindungsbereich zwischen den beiden Enden der Strebe aufweist. Während des anschließenden Rotationsschmelzens des Ausgangsmaterials wird ein Formteil erzeugt, das an drei Positionen eine feste und formschlüssige Verbindung mit der Strebe aufweist, nämlich an den beiden Enden sowie an der durch den Vorsprung ausgeformten Einbuchtung der Formteilwandung. Diese dritte Position führt zu einer mechanischen Verstärkung der Anbindung der Strebe.

Die DE 10 2009 040 930 A1 offenbart ein gattungsgemäßes Verfahren, bei dem ein Einsetzteil in Form eines Stützelements während der Herstellung eines Behälters mit dessen Wandung verbunden wird. Zur Herstellung des Behälters wird das aus einem thermoplastischen Kunststoff, beispielsweise Polyethylen, vorgefertigte Stützelement in einer Rotationsschmelzform befestigt, welche anschließend mit dem gleichen Kunststoff, beispielsweise Polyethylen, befüllt wird. Die Rotationsschmelzform wird in biaxiale Rotation versetzt und erwärmt, wobei durch thermoplastisches Urformen die Wandung des Behälters gebildet und das Stützelement von dem Kunststoffmaterial zumindest bereichsweise umsintert wird.

Ein derartiges Verfahren gestattet es, an einem Formteil einen speziellen Funktionsbereich vorzusehen, obwohl dieser Funktionsbereich in dem betrachteten Herstellverfahren (Urformverfahren) gar nicht, oder jedenfalls nicht mit den gewünschten konstruktiven Merkmalen oder Toleranzen oder in der gewünschten Position oder Orientierung, realisierbar ist. Der spezielle Funktionsbereich kann dennoch realisiert werden, indem er zumindest separat und insbesondere in einem anderen Verfahren (etwa in einem Spritzgussverfahren oder durch additive Fertigung) hergestellt und dann bei der Herstellung des Formteils als vorgefertigtes Einsetzteil verwendet wird, an welches die restlichen Abschnitte oder Bereiche des Formteils "in situ" angeformt werden, so dass das vorgefertigte Einsetzteil einen integralen Bestandteil des endgültigen Formteils bildet.

Nachteilig ist jedoch, dass bisher die Vorteile eines solchen Verfahrens nicht auf die Herstellung solcher Formteile zu übertragen ist, bei denen das für den Formteilabschnitt vorgesehene Kunststoffmaterial gar nicht oder nur unter Inkaufnahme technisch und/oder wirtschaftlich nicht optimaler Ergebnisse thermoplastisch verarbeitbar ist. Solche Fälle können beispielsweise dann vorliegen, wenn der Formteilabschnitt aus einem vernetzten Kunststoff bestehen soll, insbesondere aus einem stark vernetzten Kunststoff (Duroplaste), oder wenn der vorgesehene Kunststoff zwar ein Thermoplast ist, jedoch eine sehr hohe Schmelztemperatur aufweist, so dass die zum thermoplastischen Urformen erforderlichen Verarbeitungstemperaturen hoch sind und eine thermoplastische Verarbeitung nachteilig ist, etwa weil sie den Kunststoff selbst schädigen oder sich nachteilig auf die Lebensdauer des Formwerkzeugs auswirken würde.

Der Erfindung liegt daher die Aufgabe zugrunde, ein alternatives Verfahren zur Herstellung eines Formteils bereitzustellen, welches ein vorgefertigtes Einsetzteil und einen an das Einsetzteil angeformten Formteilabschnitt aufweist. Insbesondere scheint es wesentlich, bei der Lösung dieser Aufgabe nicht länger auf ein Verfahren abzustellen, bei welchem das Urformen des anzuformenden Formteilabschnitts auf einer thermoplastischen Verarbeitung beruht.

Diese Aufgabe wird erfindungsgemäß durch ein Verfahren gelöst, welches die Merkmale des Anspruchs 1 umfasst. Dabei werden im Einzelnen die nachfolgend aufgeführten Verfahrensschritte ausgeführt:
(a) Bereitstellen des vorgefertigten Einsetzteils umfassend einen ein erstes Polyamidmaterial umfassenden Anbindungsbereich,
(b) Bereitstellen einer zumindest ein erstes Lactammonomer enthaltenden polymerisationsfähigen Kunststoffvorläufermischung zur Herstellung eines zweiten Polyamidmaterials,
(c) Erwärmen des Anbindungsbereichs auf eine Aktivierungstemperatur T_{A},
(d) Einfüllen der Kunststoffvorläufermischung in ein Formwerkzeug,
(e) Erwärmen der Kunststoffvorläufermischung auf eine Starttemperatur T_{S},
(f) Polymerisation der Kunststoffvorläufermischung bei oder oberhalb der Starttemperatur T_{S} in dem Formwerkzeug unter Bildung des zweiten Polyamidmaterials und Formung des Formteilabschnitts, wobei eine Innenkontur des Formwerkzeugs eine Außenkontur des Formteilabschnitts bestimmt,
(g) Anordnen des Einsetzteils an oder in dem Formwerkzeug derart, dass der Anbindungsbereich während der Polymerisation zumindest zeitweise in Kontakt mit der Kunststoffvorläufermischung gelangt,
(h) Ausbilden einer Verbindung zwischen dem Formteilabschnitt und dem Anbindungsbereich des Einsetzteils.

Die Merkmale des erfindungsgemäßen Verfahrens werden im Rahmen dieser Erfindung auch als "Verfahrensschritte" bzw. "Schritte" bezeichnet und zur leichteren Bezugnahme alphabetisch gekennzeichnet. Dies soll jedoch ausdrücklich keine bestimmte Reihenfolge der Verfahrensschritte implizieren. Jeder der oben genannten oder nachfolgend erläuterten Verfahrensschritte kann vielmehr, soweit technisch möglich und sinnvoll, vor und/oder während und/oder gleichzeitig mit und/oder nach einem anderen Verfahrensschritt erfolgen. Die Nennung eines Bestandteils im Singular umfasst auch mehrere gleichartige Bestandteile, soweit dies technisch möglich und sinnvoll ist.

Entscheidend ist, dass über die genannten Verfahrensschritte hinaus die Aktivierungstemperatur T_{A} um höchstens 50 °C niedriger ist als eine erste Schmelztemperatur (Polymerschmelztemperatur) T_{P1} des ersten Polyamidmaterials. Die Aktivierungstemperatur T_{A} ist zudem um höchstens 50 °C, bevorzugt um höchsten 30 °C und ganz bevorzugt um höchstens 15 °C höher als die erste Schmelztemperatur T_{P1}. Besonders bevorzugt ist die Aktivierungstemperatur T_{A} höchstens so hoch wie die erste Schmelztemperatur T_{P1}. Dadurch werden nachteilige Effekte etwa in Form einer thermischen oder thermo-oxidativen Degradation des ersten Polyamidmaterials und/oder in Form einer Deformation des Anbindungsbereichs oder des ganzen Einsetzteils minimiert oder vermieden. Vorzugsweise ist die Aktivierungstemperatur T_{A}, unter Beibehaltung eines der vorgenannten Höchstwerte, höchstens 40°C, bevorzugt höchstens 30°C, besonders bevorzugt höchstens 20°C und ganz besonders bevorzugt höchstens 10°C niedriger als die erste Schmelztemperatur T_{P1} des ersten Polyamidmaterials. Überraschenderweise stellen bereits Aktivierungstemperaturen T_{A} unterhalb der ersten Schmelztemperatur T_{P1} die Voraussetzung für eine stabile, vor allem aber stoffschlüssige Verbindung zwischen dem Anbindungsbereich und dem Formteilabschnitt, vgl. Schritte (f) und (h), her. Das kann darauf zurückgeführt werden, dass Polymerketten an dem erwärmten Oberflächenabschnitt des Anbindungsbereichs bereits eine gewisse Beweglichkeit oder Mobilität erlangen und es so zur Ausbildung eines (semi-)interpenetrierenden Netzwerks und/oder zu einer tatsächlichen chemischen Verknüpfung zwischen Polymerketten der beiden Polyamidmaterialien des vorgefertigten Einsatzteils einerseits und des Formteils andererseits kommt. Die erste Schmelztemperatur T_{P1} kann nach ISO 11357-3 bestimmt werden.

Das in Verfahrensschritt (a) bereitgestellte vorgefertigte Einsetzteil kann eine beliebige, technisch sinnvolle Form aufweisen und beispielsweise als Tülle, Stutzen, Befestigungslasche, Filtertopf, Schnellverschluss, Kupplung, Gewinde, Bajonett, Flanschring oder Konturteil ausgebildet sein. Das Einsetzteil kann zumindest teilweise oder sogar überwiegend aus einem anderen Kunststoff oder aus einem anderen Werkstoff (beispielsweise Metall, Keramik) bestehen, solange zumindest der Anbindungsbereich aus dem ersten Polyamidmaterial besteht.

Das vorgefertigte Einsetzteil und/oder der Anbindungsbereich ist/sind bevorzugt nicht in dem für die Herstellung des Formteils verwendeten Formwerkzeug hergestellt. Die Herstellung erfolgt in diesem Fall in einem anderen als dem in den Schritten (d), (f) und (g) genannten Formwerkzeug oder in einem Fertigungsverfahren ohne formgebendes Formwerkzeug, etwa in einem additiven Fertigungsverfahren oder durch mechanische Bearbeitung eines Halbzeugs. Die Herstellung des Anbindungsbereichs oder des kompletten Einsetzteils kann vielmehr grundsätzlich durch ein beliebiges der in der Kunststoffverarbeitung bekannten Urformverfahren oder Umformverfahren erfolgen, beispielsweise durch ein Spritzgussverfahren, ein 3D-Druckverfahren, ein Standgussverfahren, ein Rotationsverfahren, ein Blasformverfahren, ein Extrusionsverfahren oder ein Thermoformverfahren. Auch die Herstellung durch mechanische Bearbeitung eines Halbzeugs ist denkbar. Dies ermöglicht die Verwendung von Einsetzteilen, die durch Verwendung des Formwerkzeugs nicht zugänglich sind, und erweitert die technischen Möglichkeiten bei der Auslegung des Formteils.

Das erste Polyamidmaterial umfasst mindestens einen Kunststoff mit Polyamidbindungen in einer Polymerhauptkette und/oder in Polymerseitenketten. So kann das erste Polyamidmaterial beispielsweise Polyamid 6, Polyamid 11, Polyamid 12, Polyamid 66 oder Polyamid 69 umfassen, schließt aber in seiner Definition auch ein Copolymer oder einen Blend umfassend zwei oder mehr der genannten Polyamide mit ein.

Das erste Polyamidmaterial weist vorzugsweise einen möglichst geringen Feuchtigkeitsgehalt auf, damit die Polymerisation gemäß Schritt (f) nicht gestört wird. Es ist daher bevorzugt, wenn das Einsetzteil oder der Anbindungsbereich vorgetrocknet wird.

Das erste Polyamidmaterial kann Additive oder Zusatzstoffe enthalten, beispielsweise Schlagzähmodifikatoren, verstärkende Füllstoffe (Glasfasern, Kohlefasern und Polymerfasern), nicht-verstärkende Füllstoffe (zum Beispiel Calciumsulfat, Calciumcarbonat, Bariumsulfat, Silikate wie Wollastonit, Kaolin, Glimmer, Hornblende, Quarz, Glaskugeln und PTFE), Flammschutzmittel (z.B. Phosphorverbindungen, wie organische Phosphate, Phosphate, Ammoniumpolysulfate und halogenierte organische Verbindungen), Entformungsmittel (z.B. Silikonöle und hochschmelzende Wachse), Gleit- und Schmiermittel (zum Beispiel paraffinische Öle), Antistatikmittel (zum Beispiel quarternäre Ammoniumsalze), Mittel zur Erhöhung der thermischen und/oder elektrischen Leitfähigkeit (Ruß, Metalle, Metalloxide und Carbon-Nanotubes), Farbstoffe, Pigmente, Stabilisatoren (zum Beispiel UV-Stabilisatoren, wie Benzophenon-Derivate, Hydrolyseschutzmittel, wie Carbodiimide, Polycarbodiimide, Anti-Oxidantien, wie etwa sterisch gehinderte Amine und Phenole), Weichmacher (z. B. Adipate und Phthalate), Anti-Blockmittel (z. B. Paraffin-, Polyethylen- und Montanwachse), Verdickungsmittel (z. B. Vinylaromat-Dien-Copolymere) und Verarbeitungsadditive, wie z. B. Reaktivverzögerer und Nukleierungsmittel, wie Molybdänsulfid.

Die in Verfahrensschritt (b) bereitgestellte polymerisationsfähige Kunststoffvorläufermischung kann neben dem ersten Lactammonomer optional weitere Bestandteile enthalten, beispielsweise einen oder mehrere der vorstehend unter Bezug auf das erste Polyamidmaterial genannten Zusatzstoffe, wobei im Fall der Kunststoffvorläufermischung nur solche Zusatzstoffe in Frage kommen, die die Polymerisation nicht inhibieren.

Das Erwärmen des Anbindungsbereichs im Verfahrensschritt (c) erfolgt vorzugsweise vor dem Kontakt des Anbindungsbereichs mit der Kunststoffvorläufermischung. Die Erfinder haben festgestellt, dass ein Erwärmen das erste Polyamidmaterial für die Ausbildung einer Verbindung zu dem Formteilabschnitt aktiviert. Das Erwärmen des Anbindungsbereichs kann vor Schritt (g) außerhalb des Formwerkzeugs oder nach Schritt (g) innerhalb des Formwerkzeugs erfolgen, wobei eine Heizvorrichtung etwa in Form eines Strahlungsheizelements, beispielsweise eines herkömmlichen Infrarotstrahlers oder einer geeigneten Laserquelle, oder eines Kontaktheizelements in Frage kommt. Der Anbindungsbereich kann auch selbst beheizbar ausgeführt sein, etwa indem in das erste Polyamidmaterial des Anbindungsbereichs ein resistiv oder induktiv erwärmbares Heizelement eingebettet ist.

Vorzugsweise erfolgt ein Energieeintrag beim Erwärmen, zumindest überwiegend, unmittelbar in einen Oberflächenabschnitt des Anbindungsbereichs, welcher in Schritt (g) mit der Kunststoffvorläufermischung in Kontakt gelangt. Durch direkte Erwärmung der für die Verbindung mit dem Formteilabschnitt relevanten Oberfläche wird dort die Aktivierungstemperatur T_{A} schnell und materialschonend erreicht. Ein Energieeintrag an anderer Stelle des Einsetzteils ist demgegenüber nachteilig, da die kunststofftypisch geringe Wärmeleitfähigkeit des ersten Polyamidmaterials in diesem Fall lange Heizzeiten und/oder starkes lokales Überheizen erfordert und zu einer Materialschädigung führen kann.

Das Einfüllen der Kunststoffvorläufermischung in das Formwerkzeug im Schritt (d) kann vor, gleichzeitig mit oder nach dem Erwärmen des Anbindungsbereichs (Schritt (c)) erfolgen. Dazu kann eine bereits außerhalb des Formwerkzeugs gemäß Schritt (b) bereitgestellte Kunststoffvorläufermischung eingefüllt werden. In diesem Fall erfolgt Schritt (d) nach Schritt (b). Alternativ dazu können die Bestandteile der Kunststoffvorläufermischung entweder einzeln und/oder in Form von zwei oder mehr Vormischungen jeweils parallel oder nacheinander in das Formwerkzeug eingefüllt werden. In diesen Fällen, bei denen die Bestandteile erst im Formwerkzeug zusammengeführt werden, wird die Kunststoffvorläufermischung mit dem Einfüllen gemäß Schritt (d) zugleich auch gemäß Schritt (b) bereitgestellt.

Das Erwärmen der Kunststoffvorläufermischung gemäß Schritt (e) kann nach Schritt (d) innerhalb des Formwerkzeugs erfolgen. Dazu kann das Formwerkzeug beheizbar ausgeführt sein oder beispielsweise in einem Ofen angeordnet sein. Alternativ kann das Erwärmen der Kunststoffvorläufermischung außerhalb des Formwerkzeugs erfolgen, bevor die auf die Starttemperatur Ts erwärmte Kunststoffvorläufermischung in das Formwerkzeug eingefüllt wird. Auch in diesem Fall ist das Formwerkzeug vorzugsweise direkt oder mittelbar beheizbar ausgeführt und vorzugsweise vor dem Einfüllen der Kunststoffvorläufermischung mindestens auf die Starttemperatur Ts vorgeheizt.

Bei dem Formwerkzeug kann es sich beispielsweise um ein Standgusswerkzeug oder um ein Reaktionsspritzgusswerkzeug handeln. Das Formwerkzeug kann insbesondere auch ein Rotationswerkzeug sein, welches während der Polymerisation zumindest zeitweise um eine Hauptachse und bevorzugt zusätzlich um eine zweite, die Hauptachse schneidende Nebenachse rotiert. Im letzteren Fall ist mit dem erfindungsgemäßen Verfahren auch ein Formteil in Form eines Hohlkörpers herstellbar.

Bei der Polymerisation der Kunststoffvorläufermischung gemäß Verfahrensschritt (f) bildet sich aus dem ersten Lactammonomer in dem Formwerkzeug *in situ* das zweite Polyamidmaterial, wobei gleichzeitig der Formteilabschnitt geformt wird. Die Kunststoffvorläufermischung kann entweder bereits vor dem Einfüllen in das Formwerkzeug oder erst im Formwerkzeug auf die Starttemperatur Ts gebracht werden, die erforderlich ist, damit die Polymerisation mit hinreichender Geschwindigkeit abläuft.

Zum Anordnen des Einsetzteils gemäß Verfahrensschritt (g) kann das Einsetzteil in einer solchen Position und Orientierung mittelbar oder unmittelbar am Werkzeug befestigt oder jedenfalls relativ zum Werkzeug fixiert werden, dass der Anbindungsbereich des Einsetzteils in einem Innenraum des Werkzeugs exponiert ist. Die Anordnung des Einsetzteils im Formwerkzeug kann vor, während oder nach dem Einfüllen der Kunststoffvorläufermischung in das Formwerkzeug erfolgen.

Im Verfahrensschritt (h) kommt es zur Ausbildung einer Verbindung zwischen dem im Schritt (f) sich bildenden Formteilabschnitt und dem Anbindungsbereich des Einsetzteils. Diese Verbindung ist wenigstens teilweise stoffschlüssig. Im Sinne der Erfindung besteht so durch Verschmelzen und/oder die Etablierung chemischer Bindungen und/oder intermolekulare oder chemische Bindungskräfte eine nicht-lösbare Verbindung, die durch atomare und/oder molekulare Kräfte zusammengehalten wird.

Eine Stoffschlüssigkeit im Sinne der Erfindung entsteht im Herstellungsprozess des Formteils, während der Formteilabschnitt urgeformt und dabei *in situ* an den Anbindungsbereich des Einsetzteils angeformt wird. Diese Stoffschlüssigkeit ist daher von anderen stoffschlüssigen Verbindungen, bei welchen zwei (jeweils vorproduzierte) Fügeteile miteinander gefügt werden, namentlich dem Kleben und dem thermoplastischen Schweißen, zu unterscheiden. Dies ist auch im gefertigten Produkt feststellbar. So wird im Gegensatz zum Kleben kein weiterer Stoff (Klebstoff) zwischen dem Anbindungsbereich des Einsetzteils und dem mit diesem verbundenen Anschlussbereich des Formteilabschnitts eingesetzt. Im Unterschied zum Schweißen tritt keine Naht (Schweißnaht) im Sinne einer Wulstbildung auf. Während etwa beim Heizelementschweißen eine Wulstbildung durch Aufpilzen (Verformen) der gegen die Heizelemente und/oder gegeneinander gedrückten Fügeflächen der Fügeteile auftritt, können im erfindungsgemäßen Verfahren Produkte ohne derartige Wulstbildung hergestellt werden.

Einige Einschränkungen, die etwa beim Laserschweißen die Kombinationen möglicher Fügepartner limitieren, lassen sich durch das erfindungsgemäße Verfahren umgehen. So muss im Fall des Laserdirektschweißens mindestens ein Fügepartner aus einem Material mit einem sehr hohen Absorptionsvermögen für das zum Schweißen eingesetzte infrarote Laserlicht der üblicherweise verwendeten Dioden- oder Nd:YAG-Laser bestehen. Insbesondere zwei amorphe und transparente, aber auch zwei semikristalline und transluzente, jedoch ungefärbte/naturfarbene Kunststoffe lassen sich daher nicht ohne Weiteres per Direktschweißen miteinander fügen. Mindestens einer der beiden Fügepartner muss dann mit einem entsprechenden IR- oder NIR-Absorber (IR: Infrarot; NIR: nahes Infrarot) versehen sein, entweder in Form einer Oberflächenbeschichtung im Fügebereich oder in Form eines Additivs, wobei der (N)IR-Absorber zugleich im sichtbaren Spektralbereich möglichst wenig Absorption im sichtbaren Spektralbereich aufweisen darf (d.h. im Wesentlichen farblos ist). Im Fall des Lasertransmissionsschweißens muss ein Fügepartner aus einem Material mit einem sehr hohen Absorptionsvermögen für das eingesetzte Laserlicht bestehen, während zugleich das Material des zweiten, beim Transmissionsschweißen durchstrahlten, Fügepartners für das (N)IR-Laserlicht möglichst transparent sein muss. Zwei farbige Kunststoffe lassen sich daher nicht ohne Weiteres per Transmissionsschweißen miteinander fügen. Dies gilt vor allem für pigmentgefärbte Kunststoffe, insbesondere beispielsweise durch Rußzusatz schwarz gefärbte Kunststoffe. Für das zu durchstrahlende Material des zweiten Fügepartners muss in diesem Fall ein spezielles, lasertransparentes Färbemittel eingesetzt werden. Die vorstehend genannten (Farb-)Kombinationen sind im erfindungsgemäßen Verfahren zugänglich, ohne dass dazu der Einsatz spezieller (N)IR-absorbierender Zusätze oder (N)IR-transparenter Färbemittel erforderlich ist.

Während bei thermoplastischen Schweißverfahren das jeweilige Material der beteiligten Fügeteile lokal deutlich über die jeweilige Schmelztemperatur erhitzt werden muss, ist das erste Polyamidmaterial des Einsetzteils bereits unterhalb seiner Schmelztemperatur aktivierbar, so dass die stoffschlüssige Verbindung im erfindungsgemäßen Verfahren ohne lokales Aufschmelzen des ersten Polyamidmaterials im Anbindungsbereich erfolgen kann. Die etwa durch DSC-Untersuchungen ermittelbare Unterschiede bzw. Gemeinsamkeiten in der thermischen Vorgeschichte des Materials eines Fügeteils im unmittelbaren Fügebereich einerseits und in einem vom Fügebereich beabstandeten Bereich des Fügeteils andererseits gestattet Rückschlüsse auf das verwendete Fügeverfahren. Auch mikroskopische Untersuchungen von Schnittflächen oder Mikrotomschnitten durch den Fügebereich, etwa mittels optischer Mikroskopie, Fluoreszenzmikroskope, Rasterkraftmikroskopie (AFM) oder Rasterelektronenmikroskopie (SEM), gestatten eine Unterscheidung der verschiedenen Fügeverfahren.

Als Produkt des erfindungsgemäßen Verfahrens erhält man das Formteil, welches das Einsetzteil und den daran *in situ* angeformten Formteilabschnitt umfasst. Durch das Vorsehen eines Anbindungsbereichs aus einem (ersten) Polyamidmaterial in Schritt (a) in Verbindung mit der Verwendung eines ersten Lactammonomers in Schritt (b), welches zu einem (zweiten) Polyamidmaterial polymerisiert, wird eine Grundkompatibilität zwischen dem Material des Anbindungsbereichs und dem Material des Formteilabschnitts erreicht, die eine gute Verbindung ermöglicht.

Das Verfahren kann beispielsweise derart ausgeführt werden, dass zunächst das vorgefertigte Einsetzteil bereitgestellt und sein Anbindungsbereich auf die Aktivierungstemperatur T_{A} gebracht wird (Verfahrensschritte (a) und (c)). Dann wird das Einsetzteil in oder an dem Formwerkzeug angeordnet (Verfahrensschritt (g)). Parallel oder anschließend wird die Kunststoffvorläufermischung bereitgestellt, auf die Starttemperatur Ts gebracht und in das vorzugsweise mindestens auf die Starttemperatur Ts vorgeheizte Formwerkzeug eingefüllt (Verfahrensschritte (b), (e), (d)). Die Kunststoffvorläufermischung polymerisiert im Formwerkzeug, wobei der Formteilabschnitt geformt wird (Verfahrensschritt (f)). Zugleich erfolgt die Ausbildung der Verbindung zwischen dem Anbindungsbereich und dem Formteilabschnitt (Verfahrensschritt (h)). Anschließend kann das Formteil, insbesondere nach vorheriger Abkühlung, aus dem Formwerkzeug entnommen werden.

Vorzugsweise enthält die Kunststoffvorläufermischung einen anionischen Katalysator und einen Aktivator. Die Polymerisation ist dann eine aktivierte anionische Polymerisation, wodurch sich hohe Polymerisationsgeschwindigkeiten und kurze Zykluszeiten erreichen lassen, so dass das Verfahren insgesamt effizient ist.

Als anionischer Katalysator zur Polymerisation von Lactammonomeren können grundsätzlich starke Basen verwendet werden. Beispielsweise können Basen auf Basis von metallorganischen Verbindungen, wie z. B. Natriumalkoholate und Natriumamide, als Katalysator eingesetzt werden. Günstig ist insbesondere auch die Verwendung von Alkalimetallen, Alkalimetallsalzen von Lactamen (beispielsweise Natrium-Caprolactamat), Alkalimetallalkoholaten, Alkalimetallhydroxiden und insbesondere bevorzugt von Alkalimetallhydriden. Weiterhin geeignet sind Alanate gemäß der Formal M[AlHₓ(OR)₄₋ₓ]ₙ, mit:
M = Metall der Gruppe la oder Ila des Periodensystems,
R = CH₂CH₂OR' mit R' = C1-C4-alkyl,
x = 1 bis 4,
n = Wertigkeit von M.

Beispiele dafür sind Na-bis-(2-methoxy-ethoxy)dihydridalanat oder Na-tetra-(ε-Caprolactam)alanat.

Als Aktivatoren kommen prinzipiell alle acylierenden Verbindungen entweder direkt oder nach Umsetzung mit dem jeweiligen Lactammonomer in Betracht. Dies sind beispielsweise Säureanhydride und Säurehalogenide (insbesondere Säurechloride), organische Peroxide, Ester, Lactone, Harnstoffe und Thioharnstoffe sowie lineare oder zyklische Isocyanate, wie z. B. Hexamethylen-1,6-bis-carbamido-caprolactam, und Allophanate bzw. Mischungen aus diesen Stoffen. Auch niedermolekulare Polymere, oft als Präpolymere bezeichnet, mit N-Acyllactam-Endgruppen können verwendet werden. Besonders günstig ist die Verwendung von Acylcaprolactam, Polycarbodiimiden und Mono- und Polyisocyanaten und deren Derivaten.

Vorzugsweise ist die Starttemperatur T_{S} (siehe Verfahrensschritt (e)) mindestens so hoch wie eine Monomerschmelztemperaur T_{M1} des ersten Lactammonomers und mindestens 10 °C niedriger als eine zweite Schmelztemperatur (Polymerschmelztemperatur) T_{P2} des zweiten Polyamidmaterials. Die Starttemperatur Ts kann, unter Beibehaltung der vorstehend genannten Obergrenze, auch insbesondere mindestens 10 °C, bevorzugt mindestens 20 °C, weiter bevorzugt mindestens 30 °C und insbesondere bevorzugt mindestens 40 °C höher sein als die Monomerschmelztemperaur T_{M1}. Das erste Lactammonomer liegt dann im geschmolzenen Zustand vor, die Kunststoffvorläufermischung ist insgesamt fließfähig, und die Polymerisation springt zügig an. Die Monomerschmelztemperaur T_{M1} des ersten Lactammonomers und die zweite Schmelztemperatur T_{P2} können beispielsweise mittels Differential Scanning Calorimetry (DSC) nach ISO 11357-3 ermittelt werden.

In einer bevorzugten Ausführungsform umfasst das Bereitstellen der Kunststoffvorläufermischung gemäß Verfahrensschritt (b) die Verfahrensschritte:
- Bereitstellen einer ersten Monomermischung umfassend das erste Lactammonomer und eine Alternativkomponente, welche als eine Komponente aus einer Gruppe bestehend aus den beiden Alternativen Katalysator und dem Aktivator ausgewählt wird, wobei die erste Monomermischung bevorzugt in Form einer ersten Schmelze bereitgestellt wird,
- Bereitstellen einer zweiten Monomermischung umfassend das erste Lactammonomer und/oder ein zweites Lactammonomer und umfassend die andere Alternativkomponente, welche die jeweils andere Komponente aus der Gruppe bestehend aus dem Katalysator und dem Aktivator ist, wobei die zweite Monomermischung bevorzugt alternativ oder ergänzend zu der ersten Monomermischung in Form einer zweiten Schmelze bereitgestellt wird,
- Vereinigen der ersten Monomermischung und der zweiten Monomermischung.

Durch das Bereitstellen von Monomermischungen, insbesondere in Form von Schmelzen, lassen sich die Bestandteile der Kunststoffvorläufermischung vor deren endgültiger Bereitstellung einfach handhaben, wobei durch die Trennung von Katalysator und Aktivator, die somit nie gemeinsam in einer Monomermischung enthalten sind, ein vorzeitiger Beginn der Polymerisation vermieden wird.

Die Vereinigung der ersten Monomermischung und der zweiten Monomermischung kann vor dem Einfüllen der Kunststoffvorläufermischung in das Formwerkzeug erfolgen, etwa in einem dem Formwerkzeug vorgeschalteten Mischbehälter. Die Vereinigung der ersten Monomermischung und der zweiten Monomermischung kann alternativ auch im Formwerkzeug selbst erfolgen.

In einer weiteren Ausführungsform des Verfahrens wird die Kunststoffvorläufermischung für eine Zeit (Wartezeit) t_{W} auf oder oberhalb einer Wartetemperatur T_{W} gehalten, bevor der Anbindungsbereich des Einsetzteils erstmals in Kontakt mit der Kunststoffvorläufermischung gelangt. Dabei ist die Wartetemperatur T_{W} mindestens so hoch wie die Monomerschmelztemperatur T_{M1}, insbesondere mindestens so hoch wie die Starttemperatur T_{S}. In anderen Worten beginnt die Wartezeit t_{W}, wenn die bereitgestellte Kunststoffvorläufermischung erstmalig das Temperaturkriterium in Form des Erreichens der Wartetemperatur T_{W} erfüllt, und sie endet, wenn die Kunststoffvorläufermischung und der Anbindungsbereich erstmals miteinander in Kontakt gelangen. Die Kunststoffvorläufermischung kann während der Wartezeit eine konstante Temperatur aufweisen oder eine zeitlich veränderliche Temperatur aufweisen mit einem Temperaturverlauf mit mindestens einem Minimum und mindestens einem Maximum, wobei die Wartetemperatur T_{W} während der Wartezeit t_{W} nicht unterschritten wird. Der Beginn der Wartezeit t_{W} markiert aus chemischer Sicht im Wesentlichen den Zeitpunkt, zu dem alle Voraussetzungen für ein Einsetzen der Polymerisation gegeben sind, sodass die Kunststoffvorläufermischung während der Wartezeit t_{W} bereits polymerisiert. Man kann die Wartezeit t_{W} daher auch als Vorpolymerisationszeit bezeichnen im Sinne einer Polymerisation vor dem ersten Kontakt zwischen der Kunststoffvorläufermischung und dem Anbindungsbereich. Der Begriff "Kunststoffvorläufermischung" umfasst insoweit auch die polymerisierende bzw. anpolymerisierte Kunststoffvorläufermischung einschließlich im Zuge der Polymerisation gebildeter bzw. sich bildender Anteile an Oligomeren und/oder Polymeren.

Da die Polymerisation von Lactamen exotherm erfolgt, steigt die Temperatur der polymerisierenden Kunststoffvorläufermischung zumindest bei der Verwendung dieser Monomere während der Wartezeit t_{W}. Sofern die Kunststoffvorläufermischung zumindest einen Teil der Wartezeit t_{W} in dem auf eine Temperatur oberhalb der Starttemperatur T_{S} vorgeheizten Formwerkzeug verbringt, wird sie während der Wartezeit t_{W} zusätzlich durch das Formwerkzeug erwärmt. Durch das Vorsehen einer Wartezeit t_{W} trifft die Kunststoffvorläufermischung jedenfalls mit einer höheren Temperatur auf den Anbindungsbereich des Einsetzteils. Dadurch wird dessen Erwärmung auf die Aktivierungstemperatur T_{A} unterstützt oder, sofern die Starttemperatur T_{S} unter der Aktivierungstemperatur T_{A} liegt, der Anbindungsbereich beim ersten Kontakt zumindest in geringerem Maße abgekühlt, als dies ohne Wartezeit (Vorpolymerisationszeit) t_{W} der Fall wäre.

Die Wartezeit t_{W} kann mindestens 10 Sekunden betragen, vorzugsweise mindestens 30 Sekunden, insbesondere mindestens 90 Sekunden, weiter bevorzugt mindestens 120 Sekunden. Dabei ist es vorteilhaft, wenn die Wartezeit t_{W} höchstens so lang ist wie die Zeit, die die Kunststoffvorläufermischung (vom Beginn der Wartezeit t_{W}) zum Erreichen einer Viskosität von 5000 mPa·s, bevorzugt zum Erreichen einer Viskosität von 2000 mPa·s, insbesondere bevorzugt zum Erreichen einer Viskosität von 1000 mPa·s, benötigt. Die Viskosität kann bestimmt werden nach ISO 2555:2018. Bei derartigen Viskositäten ist ein Einbetten des Anbindungsbereichs in die polymerisierende Kunststoffvorläufermischung aus rheologischer Sicht gut möglich. Zugleich ist die Polymerisation dann nicht zu weit fortgeschritten, so dass sich noch eine Verbindung zwischen dem Anbindungsbereich und dem Formteilabschnitt ausbilden kann.

Das erste Polyamidmaterial kann vernetzt sein. Durch eine Vernetzung der Polymerketten wird die Wärmeformbeständigkeit des Anbindungsbereichs verbessert. Dies gestattet die Anwendung einer etwas höheren Aktivierungstemperatur T_{A}, ohne dass es zu unzulässig starker Deformation des Anbindungsbereichs kommt.

In einer bevorzugten Ausführungsform des Verfahrens ist das erste Lactammonomer ein Caprolactam oder ein Laurinlactam. Caprolactam (Schmelztemperatur ca. 70°C) ist das Monomer des Polyamids 6 (Schmelztemperatur ca. 218-222°C), und Laurinlactam (Schmelztemperatur ca. 150-153°C) ist das Monomer des Polyamids 12 (Schmelztemperatur ca. 178-182°C).

Bei Verwendung der genannten Lactame umfasst oder ist das zweite Polyamidmaterial demnach ein Polyamid 6 oder ein Copolymer oder ein Blend umfassend Polyamid 6 bzw. ein Polyamid 12 oder ein Copolymer oder ein Blend umfassend Polyamid 12. Diese Polyamide haben gute Gebrauchseigenschaften und weisen etwa im Vergleich mit anderen Thermoplasten relativ hohe Einsatztemperaturen auf.

In einer bevorzugten Ausführungsform des Verfahrens ist das zweite Lactammonomer ein Caprolactam oder ein Laurinlactam.

In einer weiteren Ausführungsform des Verfahrens ist die erste Schmelztemperatur T_{P1} des ersten Polyamidmaterials niedriger als eine zweite bzw. die zweite Schmelztemperatur T_{P2} des zweiten Polyamidmaterials. Insbesondere ist die erste Schmelztemperatur T_{P1} mindestens 15°C niedriger, bevorzugt mindestens 20°C niedriger, weiter bevorzugt mindestens 25°C niedriger, weiter bevorzugt mindestens 30°C niedriger, weiter bevorzugt mindestens 40°C niedriger als die zweite Schmelztemperatur T_{P2}. Die Schmelztemperaturen T_{P1} und T_{P2} können nach ISO 11357-3 bestimmt werden.

Die erfindungsgemäßen Relationen zwischen der ersten und der zweiten Schmelztemperatur T_{P1} und T_{P2} führen zu den nachfolgend erläuterten Vorteilen. Mit abnehmender erster Schmelztemperatur T_{P1} sinkt in gleichem Maße auch die absolute (und weiter oben relativ zur ersten Schmelztemperatur T_{P1} angegebene) Aktivierungstemperatur T_{A}, auf welche der Anbindungsbereich des Einsetzteils in Schritt (c) mindestens erwärmt werden muss. Damit wird es einfacher, den Anbindungsbereich für das Ausbilden einer Verbindung zu dem Formteilabschnitt zu aktivieren. Weitere Vorteile ergeben sich im Zusammenhang mit der nachfolgend beschriebenen Ausführungsform, welche jedoch auch unabhängig hiervon vorteilhaft ist.

Erfindungsgemäße Temperaturrelationen lassen sich durch geeignete Wahl des ersten Polyamidmaterials und des ersten Lactammonomers realisieren. Ausgehend beispielsweise von ε-Caprolactam als erstes (und einziges) Lactammonomer bildet sich als zweites Polyamidmaterial Polyamid 6 (Schmelztemperatur ca. 220°C). Als erstes Polyamidmaterial kann dann vorteilhaft etwa Polyamid 11 (Schmelztemperatur ca. 190°C) oder Polyamid 12 (Schmelztemperatur ca. 180°C) eingesetzt werden. Als erstes Polyamidmaterial kommen in dieser Hinsicht insbesondere aber auch Copolyamide in Frage, etwa PA6/66, PA6/12 oder PA6/69. Die Schmelztemperaturen von Copolymeren sind über deren Monomermischungsverhältnis einstellbar, wobei insbesondere auch Werte unterhalb der beiden Schmelztemperaturen der entsprechenden Homopolymere erreicht werden können. Beispielsweise liegt die Schmelztemperatur eines PA6/12-Copolymers mit einem molaren Monomermischungsverhältnis Caprolactam:Laurinlactam von 50:50 bei ca. 138°C.

In einer weiteren Ausführungsform des Verfahrens ist eine maximale Polymerisationstemperatur T_{PmaX} niedriger als eine zweite bzw. die zweite Schmelztemperatur T_{P2} des zweiten Polyamidmaterials. Der Begriff "Polymerisationstemperatur" bezeichnet dabei die Temperatur der Kunststoffvorläufermischung bzw. des aus der Kunststoffvorläufermischung sich bildenden bzw. gebildeten zweiten Polyamidmaterials während des Verfahrens.

Eine derartige Temperaturführung vermeidet oder reduziert nachteilige Auswirkungen auf das zweite Polyamidmaterial (etwa Degradation) und/oder das Formwerkzeug (etwa reduzierte Lebensdauer durch wiederholte große Temperaturwechsel). Insbesondere wird ein Aufschmelzen des bei der Polymerisation sich bildenden zweiten Polyamidmaterials minimiert oder vermieden, so dass das Formteil nach den Schritten (f) bis (h) zügig und ohne unnötig lange Kühlphase aus dem Formwerkzeug entnommen werden kann, weil das zweite Polyamidmaterial keinen Schmelzezustand erreicht und daher, jedenfalls zum Verfestigen, keine Abkühlung erforderlich ist. Dies wirkt sich günstig auf die Zykluszeit und die Energieeffizienz des Verfahrens aus.

Insbesondere in Verbindung mit der vorstehend beschriebenen Ausführungsform ist es vorteilhaft, wenn die erste und die zweite Schmelztemperatur T_{P1} und T_{P2} die weiter oben erläuterten bevorzugten Temperaturrelationen aufweisen. Dadurch öffnet sich zwischen der ersten Schmelztemperatur T_{P1} und der zweiten Schmelztemperatur T_{P2} ein Temperaturfenster, welches es erleichtert, einerseits das erste Polyamidmaterial, dessen minimale Aktivierungstemperatur T_{A} von der ersten Schmelztemperatur T_{P1} abhängt, ausreichend zu aktivieren und andererseits das Verfahren gleichzeitig bei hinreichend niedrigen Polymerisationstemperaturen zu führen, insbesondere unterhalb der zweiten Schmelztemperatur T_{P2}, was mit den vorstehend beschriebenen Vorteilen einhergeht.

In einer bevorzugten Ausführungsform des Verfahrens erfolgt das Erwärmen des Anbindungsbereichs durch eine, bevorzugt an oder in dem Formwerkzeug angeordnete, Heizvorrichtung. Durch die Verwendung der Heizvorrichtung kann die Erwärmung des Anbindungsbereichs gesteuert werden. Zudem wird dadurch eine verlässliche Erwärmung des Anbindungsbereichs auf eine bestimmte Temperatur über eine wählbare Heizzeit ermöglicht.

In einer weiteren Ausführungsform des Verfahrens liegt die Heizvorrichtung während einer Kontaktzeit t_{K} mittels eines Kontaktbereichs an dem Anbindungsbereich an und wird am Ende der Kontaktzeit t_{K} relativ zu dem Anbindungsbereich bewegt und gibt diesen für den Kontakt mit der Kunststoffvorläufermischung zumindest teilweise frei.

Der Kontaktbereich kann Teil eines Heizstempels oder Heizspiegels der Heizvorrichtung sein. Eine Kontaktbeheizung ist besonders effizient und gut kontrollierbar. Die Kontaktzeit (Heizzeit) hängt ab von der Größe und Masse bzw. Wärmekapazität des Anbindungsbereichs einerseits und der (Soll-)Temperatur T_{Soll}, Heizleistung, Größe und Masse bzw. Wärmekapazität des Heizelements andererseits und kann für die jeweiligen Gegebenheiten durch Vorversuche ermittelt werden.

In einer weiteren Ausführungsform des Verfahrens ist eine Solltemperatur T_{Soll} der Heizvorrichtung bei dem Erwärmen des Anbindungsbereichs um höchstens 50°C niedriger als die erste Schmelztemperatur T_{P1}. Dadurch lassen sich die vorstehend in Bezug auf die (Mindest-)Aktivierungstemperatur T_{A} erläuterten Vorteile erzielen.

Vorzugsweise ist die Solltemperatur T_{Soll} höchstens 40°C, bevorzugt höchstens 30°C, bevorzugt höchstens 20°C und weiter bevorzugt höchstens 10°C niedriger als die erste Schmelztemperatur T_{P1}. Sehr bevorzugt ist die Solltemperatur T_{Soll} mindestens so hoch wie die erste Schmelztemperatur T_{P1}, insbesondere mindestens 10°C höher als die erste Schmelztemperatur T_{P1}. Höhere Solltemperaturen T_{Soll} ermöglichen grundsätzlich ein schnelleres Erwärmen des Anbindungsbereichs. Es ist jedoch günstig, wenn die Solltemperatur T_{Soll} höchstens um 100°C höher ist als die erste Schmelztemperatur T_{P1}, bevorzugt höchstens um 80°C höher, weiter bevorzugt um höchstens 65°C höher.

Günstige Bereiche für die Solltemperatur T_{Soll} werden demnach begrenzt durch jegliche Kombination eines der vorstehend relativ zu der ersten Schmelztemperatur T_{P1} angegeben Mindestwerte mit einem der vorstehend relativ zu der ersten Schmelztemperatur T_{P1} angegebenen Höchstwerte.

Die Einhaltung der zuvor angegebenen Mindestwerte der Solltemperatur T_{Soll} ermöglicht im Rahmen des erfindungsgemäßen Verfahrens die Ausbildung der Verbindung zwischen dem Anbindungsbereich des Einlegeteils und dem Formteilabschnitt. Die Einhaltung der zuvor angegebenen Höchstwerte der Solltemperatur T_{Soll} verhindert eine Schädigung des ersten Polyamidmaterials.

Nachfolgend wird das erfindungsgemäße Verfahren anhand mehrerer nicht begrenzender Ausführungsbeispiele dargestellt, wobei zunächst die jeweils verwendeten Materialien und Komponenten erläutert werden:

### Beispiele

Als Einsetzteil diente jeweils ein Rundstab aus nicht eingefärbtem Polyamid 6 (erstes Polyamidmaterial) mit einem Durchmesser von ca. 7 mm. Ein planes Ende des Rundstabs bildete den Anbindungsbereich. In dem Rundstab war eine zentrierte und im Abstand von 0,5 mm von dem planen Ende am Anbindungsbereich des Rundstabs endende Bohrung zur Aufnahme eines mit einem Datenlogger verbundenen Temperatursensors vorgesehen. Der Temperatursensor konnte damit unmittelbar an dem Anbindungsbereich positioniert werden.

Zur Herstellung der Kunststoffvorläufermischung wurden zunächst zwei Monomermischungen vorbereitet. Die erste Monomermischung enthielt 500 ml flüssiges (d.h. geschmolzenes) ε-Caprolactam (Feuchtigkeitsgehalt ≤ 0,01 Gewichts-%, 14 g einer Aktivatorzubereitung (Hexamethylen-1,6-bis-carbamido-caprolactam in Caprolactam, Aktivator C20P der Firma Brüggemann, Heilbronn), 0,3 g Wachs (Licowax E der Firma Clariant Plastics & Coatings GmbH, Frankfurt) sowie 4 g Flammruß, Partikelgröße < 50 µm. Das Wachs diente als Entformungshilfe. Der Rußzusatz erfolgte lediglich, um am fertigen Formteil eine Untersuchung des Übergangsbereichs zwischen dem (nicht eingefärbten) ersten Polyamidmaterial des Anbindungsbereichs und dem aus der Kunststoffvorläufermischung gebildeten (eingefärbten) zweiten Polyamidmaterial des Formteilabschnitts zu erleichtern. Die zweite Monomermischung enthielt 500 ml flüssiges ε-Caprolactam und 20 g einer Katalysatorzubereitung (Natrium-Caprolactamat in Caprolactam, Katalysator Addonyl Kat NL der Firma Lanxess, Köln). Die Monomerschmelzen wurden bis zu ihrer Verwendung bei 100°C unter Luft- und Feuchtigkeitsausschluss gehalten.

Als Formwerkzeug wurde eine kontrolliert elektrisch beheizbare Standgussform aus Aluminium verwendet. Der Innenraum zur Aufnahme der Kunststoffvorläufermischung hatte die Form eines aufrechtstehenden Zylinders mit einem Innendurchmesser von 22 mm und einer Höhe von 20 mm. In diesem Werkzeug gebildete Formteile oder Formteilabschnitte waren also Zylinder mit einem Durchmesser von ca. 22 und einer von der eingefüllten Materialmenge abhängigen Höhe von maximal ca. 20 mm.

Zur Erwärmung des Anbindungsbereichs diente ein kontrolliert elektrisch beheizbarer Heizstempel.

Bei den Ausführungsbeispielen wurde jeweils das nachfolgend beschriebene Verfahren durchlaufen. Die Spaltenangaben beziehen sich auf die nachfolgende Tabelle 1, die eine Übersicht der Verfahrensparameter und der Ergebnisse enthält.

Das Formwerkzeug wurde auf 165°C aufgeheizt, vgl. Spalte (F). Der mit einem Temperatursensor versehene Rundstab wurde aufrechtstehend mit seinem planen Ende auf den auf die Solltemperatur T_{Soll}, vgl. Spalte (B), beheizten Heizstempel aufgesetzt. Dabei war der Rundstab relativ zu dem Heizstempel fixiert, und der Heizstempel und der Rundstab waren im Kontaktbereich von einem Abschirmelement umgeben, um Konvektionsverluste zu minimieren. Anschließend wurden (zeitlich abgestimmt mit dem vorangehenden Schritt und dem nachfolgenden Schritt) abgemessene Mengen der auf 100°C temperierten ersten und zweiten Monomerschmelzen im Verhältnis 1:1 in die vorgeheizte Standgussform gegeben und zügig gemischt und dadurch zu einer Kunststoffvorläufermischung vereint, die eine Starttemperatur T_{S} von 100°C aufwies, Spalte (E). Nach Ablauf der Heizzeit, Spalte (C), des Anbindungsbereichs wurde (zeitlich abgestimmt mit dem vorangehenden Schritt) der Rundstab von dem Heizstempel entfernt und derart in einer Halterung fixiert, dass er konzentrisch in der Standgussform angeordnet und 3 mm tief in die Kunststoffvorläufermischung eingetaucht war. Das Formteil wurde 10 Minuten nach dem Einfüllen der Monomerschmelzen aus dem Standgusswerkzeug entnommen. Zu diesem Zeitpunkt hatte sich aus der flüssigen Kunststoffvorläufermischung festes Polyamid 6 (als zweites Polyamidmaterial) in Form des zweiten Formteilabschnitts gebildet, in welches der Anbindungsbereich des Rundstabs eingebettet war.

Anschließend wurde die Festigkeit der Verbindung zwischen dem Rundstab und dem aus der Kunststoffvorläufermischung gebildeten und an das Ende des Rundstabs angeformten Formteilabschnitts mittels einer Zugprüfmaschine ermittelt. Dazu wurde das in dem Verfahren hergestellte Formteil am freien Ende des Rundstabs einerseits und am zylindrischen Formteilabschnitt andererseits in entsprechenden Aufnahmeelementen fixiert und mit einer zunehmenden Zugkraft beaufschlagt, bis entweder eine Einschnürung oder ein Bruch im Bereich des Rundstabs oder eine Trennung des Anbindungsbereichs von dem Formteilabschnitt erfolgte. Die maximal erreichte Zugkraft ist in Spalte (G) dargestellt.

**Tabelle 1:**

| **(A)** | **(B)** | **(C)** | **(D)** | **(E)** | **(F)** | **(G)** |
|---|---|---|---|---|---|---|
| Beispiel | SollTemperatur T_{Soll} Heizstempel | Heizzeit Anbindungsbereich | Temperatur Anbindungsbereich am Ende der Heizzeit (=Aktivierungstemperatur T_{A}) | Starttemperatur T_{S} Kunststoff-vorläufer-mischung | Temperatur Formwerkzeug bei Zugabe der Kunststoffvor-läufermischung | Maximal erreichte Zugkraft |
| **Nr.** | °C | S | °C | °C | °C | kN |
| **1** | 200 | 210 | 175 ± 2 | 100 | 165 | 2,2 ± 0,3 |
| **2** | 210 | 210 | 185 ± 2 | 100 | 165 | 2,4 ± 0,2 |
| **3** | 220 | 210 | 195 ± 2 | 100 | 165 | 2,6 ± 0,05 |
| **4** | 240 | 210 | 220 ± 3 | 100 | 165 | 2,6 ± 0,06 |
| **5** | 260 | 210 | 225 ± 3 | 100 | 165 | 2,6 ± 0,04 |
| **6** | 280 | 210 | 235 ± 3 | 100 | 165 | 2,6 ± 0,04 |
| **R1** | -- | -- | Raumtemperatur | 100 | 165 | keine Verbindung |
| **R2** | 100 | 210 | 78 ± 2 | 100 | 165 | < 0,2...0,4 |

Die Wartezeit t_{W} (Vorpolymerisationszeit) zwischen dem Mischen der Monomermischungen in der Standgussform und dem ersten Kontakt des Rundstabs mit der Kunststoffvorläufermischung betrug jeweils ca. 10 Sekunden.

Die Polymerisationstemperatur, d.h. die Temperatur der Kunststoffvorläufermischung bzw. des daraus sich bildenden bzw. gebildeten zweiten Polyamidmaterials, blieb während des ganzen Verfahrens jeweils unterhalb von etwa 190°C (T_{Pmax}≈ 190 °C) und damit deutlich unterhalb der Schmelztemperatur T_{P2} des zweiten Polyamidmaterials (Polyamid 6).

Bei den in Tabelle 1 dargestellten Beispielen 1 bis 6 sowie R1 und R2 wurden jeweils fünf Verfahrensdurchläufe mit identischen Parametern durchgeführt. Die Aktivierungstemperatur T_{A}, Spalte (D), und die Ergebnisse in Bezug auf die Festigkeit der Verbindung zwischen dem Einsetzteil und dem Formteilabschnitt, Spalte (G), sind in Tabelle 1 jeweils als Mittelwerte dargestellt. Die Referenzbeispiele R1 und R2 beziehen sich auf nicht erfindungsgemäße Verfahren, bei denen keine stabile Verbindung zwischen dem Anbindungsbereich (planes Ende des Rundstabs) und dem im Standgusswerkzeug hergestellten Formteilabschnitt erzielt wurde. Die Ausführungsformen des erfindungsgemäßen Verfahrens ermöglichen die Herstellung stabiler Formteile, vgl. Beispiele 1 bis 6, Spalte (G).

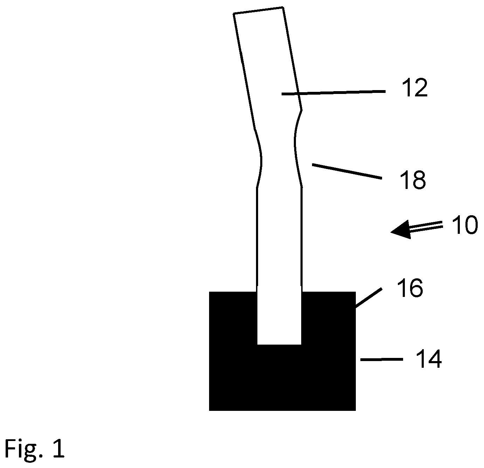

Ein nach dem oben beschriebenen Verfahren bei einer Heizstempeltemperatur Tₛₒₗₗ von 220°C (d.h. gemäß Beispiel Nr. 3) hergestelltes Formteil 10 nach Durchführung des vorstehend beschriebenen Zugversuchs ist in **Figur 1** in einer im Wesentlichen axialen Schnittansicht gezeigt. Das Formteil 10 umfasst das (nicht eingefärbte) vorgefertigte Einsetzteil 12 in Form eines Rundstabs und den (schwarz eingefärbten) Formteilabschnitt 14. Der Anbindungsbereich 16 des Einsetzteil 12 ist in das Material des Formteilabschnitts 14 eingebettet und mit dem Formteilabschnitt 14 verbunden. Der Rundstab 12 weist eine durch die Belastung während des Zugversuchs herbeigeführte Einschnürung 18 auf.

## Patentansprüche

1. Verfahren zur Herstellung eines Formteils (10), welches ein vorgefertigtes Einsetzteil (12) und einen an das Einsetzteil (12) angeformten Formteilabschnitt (14) aufweist, wobei das vorgefertigte Einsetzteil (12) einen ein erstes Polyamidmaterial umfassenden Anbindungsbereich (16) aufweist, wobei das Formteil (10) hergestellt wird durch Bereitstellen einer zumindest ein erstes Lactammonomer enthaltenden polymerisationsfähigen Kunststoffvorläufermischung zur Herstellung eines zweiten Polyamidmaterials, durch Einfüllen der Kunststoffvorläufermischung in ein Formwerkzeug, durch Erwärmen der Kunststoffvorläufermischung auf eine Starttemperatur (T_{S}) und durch Polymerisation der Kunststoffvorläufermischung bei oder oberhalb der Starttemperatur (T_{S}) in dem Formwerkzeug unter Bildung des zweiten Polyamidmaterials und Formung des Formteilabschnitts (14), wobei eine Innenkontur des Formwerkzeugs eine Außenkontur des Formteilabschnitts (14) bestimmt, **dadurch gekennzeichnet, dass** das Einsetzteil (12) an oder in dem Formwerkzeug derart angeordnet ist, dass der auf eine Aktivierungstemperatur (T_{A}) erwärmte Anbindungsbereich (16) während der Polymerisation zumindest zeitweise in Kontakt mit der Kunststoffvorläufermischung gelangt, wobei die Aktivierungstemperatur (T_{A}) um maximal 50 °C niedriger und um maximal 50 °C höher ist als eine erste Polymerschmelztemperatur (T_{P1}) des ersten Polyamidmaterials, wodurch sich eine Verbindung zwischen dem Formteilabschnitt (14) und dem Anbindungsbereich (16) des Einsetzteils (12) ausbildet.

2. Verfahren nach Anspruch 1, **dadurch gekennzeichnet, dass** die Kunststoffvorläufermischung einen Katalysator und einen Aktivator enthält.

3. Verfahren nach Anspruch 1 oder 2, **dadurch gekennzeichnet, dass** die Starttemperatur (T_{S}) mindestens so hoch ist wie eine Monomerschmelztemperatur (T_{M1}) des ersten Lactammonomers, bevorzugt um mindestens 10 °C höher ist als die Monomerschmelztemperatur (T_{M1}) und mindestens 10 °C niedriger ist als eine zweite Polymerschmelztemperatur (T_{P2}) des zweiten Polyamidmaterials.

4. Verfahren nach einem der Ansprüche 2 oder 3, **dadurch gekennzeichnet, dass** das Bereitstellen der Kunststoffvorläufermischung unter Verwendung folgender Schritte erfolgt:
i. Bereitstellen einer ersten Monomermischung umfassend das erste Lactammonomer und einen Zusatz bestehend aus einer der beiden Alternativkomponenten Katalysator oder Aktivator,
ii. Bereitstellen einer zweiten Monomermischung umfassend das erste Lactammonomer und/oder ein zweites Lactammonomer und einen Zusatz bestehend aus der anderen Alternativkomponente Katalysator oder Aktivator,
iii. Vereinigen der ersten Monomermischung und der zweiten Monomermischung.

5. Verfahren nach einem der Ansprüche 3 oder 4, **dadurch gekennzeichnet, dass** die Kunststoffvorläufermischung für eine Zeit (t_{W}), insbesondere eine Zeit (t_{W}) von mindestens 10 Sekunden, auf oder oberhalb einer Wartetemperatur (T_{W}) gehalten wird, bevor der Anbindungsbereich (16) des Einsetzteils (12) erstmals in Kontakt mit der Kunststoffvorläufermischung gelangt, und dass die Wartetemperatur (T_{W}) mindestens so hoch ist wie die Monomerschmelztemperatur (T_{M1}) und/oder insbesondere mindestens so hoch ist wie die Starttemperatur (T_{S}).

6. Verfahren nach einem der vorstehenden Ansprüche, **dadurch gekennzeichnet, dass** das erste Lactammonomer ein Caprolactam oder ein Laurinlactam ist.

7. Verfahren nach einem der Ansprüche 4 bis 6, **dadurch gekennzeichnet, dass** das zweite Lactammonomer ein Caprolactam oder ein Laurinlactam ist.

8. Verfahren nach einem der vorstehenden Ansprüche, **dadurch gekennzeichnet, dass** die erste Polymerschmelztemperatur (T_{P1}) niedriger ist als eine zweite / die zweite Polymerschmelztemperatur (T_{P2}) des zweiten Polyamidmaterials.

9. Verfahren nach einem der vorstehenden Ansprüche, **dadurch gekennzeichnet, dass** eine maximal während der Polymerisation auftretende Temperatur (T_{Pmax}) der Kunststoffvorläufermischung und des aus der Kunststoffvorläufermischung sich bildenden und gebildeten zweiten Polyamidmaterials niedriger ist als eine zweite / die zweite Polymerschmelztemperatur (T_{P2}) des zweiten Polyamidmaterials.

10. Verfahren nach einem der vorstehenden Ansprüche, **dadurch gekennzeichnet, dass** das Erwärmen des Anbindungsbereichs (16) durch eine, bevorzugt an oder in dem Formwerkzeug angeordnete, Heizvorrichtung erfolgt.

11. Verfahren nach Anspruch 10, **dadurch gekennzeichnet, dass** die Heizvorrichtung während einer Kontaktzeit (t_{K}) mit einem Kontaktbereich an dem Anbindungsbereich (16) anliegt und nach der Kontaktzeit (t_{K}) relativ zu dem Anbindungsbereich (16) bewegt wird, so dass dieser für den Kontakt mit der Kunststoffvorläufermischung zumindest teilweise freigegeben wird.

12. Verfahren nach einem der Ansprüche 10 oder 11, **dadurch gekennzeichnet, dass** eine Solltemperatur (Tₛₒₗₗ) der Heizvorrichtung bei dem Erwärmen des Anbindungsbereichs (16) um höchstens 50 °C niedriger ist als eine zweite / die zweite Polymerschmelztemperatur (T_{P2}) des zweiten Polyamidmaterials.

## Claims

1. A method for producing a molded part (10) including a prefabricated insert part (12) and a molded-part portion (14) molded onto the insert part (12); the prefabricated insert part (12) having a connection region (16) including a first polyamide material; the molded part (10) being produced by providing a polymerizable plastic precursor mixture containing at least a first lactam monomer for producing a second polyamide material,
introducing the plastic precursor mixture into a mold, heating the plastic precursor mixture to a start temperature (T_{S}), and polymerizing the plastic precursor mixture in the mold, at or above the start temperature (T_{S}), such that the second polyamide material is formed and the molded-part portion (14) is molded; an inner contour of the mold determining an outer contour of the molded-part portion (14),
**characterized in that** the insert part (12) is positioned on or in the mold in such a way that the connection region (16) heated to an activation temperature (T_{A}) comes in contact with the plastic precursor mixture at least temporarily during the polymerization, the activation temperature (T_{A}) being no more than 50 °C lower and no more than 50 °C higher than a first polymer melting temperature (T_{P1}) of the first polyamide material, whereby a bond forms between the molded-part portion (14) and the connection region (16) of the insert part (12).

2. The method as recited in claim 1,
**characterized in that** the plastic precursor mixture contains a catalyst and an activator.

3. The method as recited in claim 1 or 2,
**characterized in that** the start temperature (T_{S}) is at least as high as a monomer melting temperature (T_{M1}) of the first lactam monomer, preferably at least 10 °C higher than the monomer melting temperature (T_{M1}), and at least 10 °C lower than a second polymer melting temperature (T_{P2}) of the second polyamide material.

4. The method as recited in any of claims 2 or 3,
**characterized in that** the providing of the plastic precursor mixture is accomplished using the following steps:
i. providing a first monomer mixture including the first lactam monomer and an additive composed of one of the two alternative components of catalyst or activator,
ii. providing a second monomer mixture including the first lactam monomer and/or a second lactam monomer and an additive composed of the other of the alternative components of catalyst or activator,
iii. combining the first monomer mixture and the second monomer mixture.

5. The method as recited in any of claims 3 or 4,
**characterized in that** the plastic precursor mixture is maintained at or above a waiting temperature (T_{W}) for a time (t_{W}), in particular a time (t_{W}) of at least 10 seconds, before the connection region (16) of the insert part (12) first comes into contact with the plastic precursor mixture, and **in that** the waiting temperature (T_{w}) is at least as high as the monomer melting temperature (T_{M1}), and/or in particular at least as high as the start temperature (T_{S}).

6. The method as recited in any of the preceding claims,
**characterized in that** the first lactam monomer is a caprolactam or a laurolactam.

7. The method as recited in any of claims 4 through 6,
**characterized in that** the second lactam monomer is a caprolactam or a laurolactam.

8. The method as recited in any of the preceding claims,
**characterized in that** the first polymer melting temperature (T_{P1}) is lower than a second / the second polymer melting temperature (T_{P2}) of the second polyamide material.

9. The method as recited in any of the preceding claims,
**characterized in that**, during the polymerization, a maximum occurring temperature (T_{Pmax}) of the plastic precursor mixture and of the second polyamide material forming and formed from the plastic precursor mixture is lower than a second / the second polymer melting temperature (T_{P2}) of the second polyamide material.

10. The method as recited in any of the preceding claims,
**characterized in that** the heating of the connection region (16) is carried out using a heating device, which is preferably disposed on or in the mold.

11. The method as recited in claim 10,
**characterized in that** the heating device is in contact with the connection region (16) via a contact region during a contact time (t_{K}) and, at the end of the contact time (t_{K}), is moved relative to the connection region (16), clearing it at least partially for contact with the plastic precursor mixture.

12. The method as recited in any of claims 10 or 11,
**characterized in that** a setpoint temperature (Tₛₑₜₚₒᵢₙₜ) of the heating device during the heating of the connection region (16) is no more than 50 °C lower than a second / the second polymer melting temperature (T_{P2}) of the second polyamide material.

## Revendications

1. Procédé de fabrication d'une pièce moulée (10) comportant une pièce d'insertion préfabriquée (12) et une section de pièce moulée (14) formée sur la pièce d'insertion (12), la pièce d'insertion préfabriquée (12) présentant une zone de fixation comprenant un premier matériau en polyamide (16), la pièce moulée (10) étant obtenue en prévoyant un mélange précurseur de plastique polymérisable contenant au moins un premier monomère de lactame pour la production d'un second matériau en polyamide, en mettant le mélange précurseur de plastique dans un outil de moulage, en chauffant le mélange précurseur de plastique à une température de démarrage (T_{S}) dans l'outil de moulage et par polymérisation du mélange précurseur de plastique à ou au-dessus de la température de démarrage (T_{S}) dans l'outil de moulage en formant le second matériau de polyamide et en formant la section de la pièce moulée (14), un contour intérieur de l'outil de moulage déterminant un contour extérieur de la section de la pièce moulée (14), **caractérisé en ce que** la pièce d'insertion (12) est disposée sur ou dans l'outil de moulage de manière à ce que la zone de connexion (16) chauffée à une température d'activation (T_{A}) entre en contact avec le mélange précurseur de plastique au moins temporairement pendant la polymérisation, la température d'activation (T_{A}) étant inférieure de 50 °C au maximum et supérieure de 50 °C au maximum à une première température de fusion du polymère initiale (T_{P1}) du premier matériau en polyamide, en créant ainsi un lien entre la section de la pièce moulée (14) et la zone de connexion (16) de la pièce d'insertion (12).

2. Procédé selon la revendication 1, **caractérisé en ce que** le mélange précurseur de plastique contient un catalyseur et un activateur.

3. Procédé selon la revendication 1 ou 2, **caractérisé en ce que** la température de démarrage (T_{S}) est au moins égale à la température de fusion de monomère (T_{M1}) du premier monomère lactamique, de préférence supérieure d'au moins 10 °C à la température de fusion monomère (T_{M1}) et au moins 10 °C inférieure à une seconde température de fusion du polymère (T_{P2}) du second matériau polyamide.

4. Procédé selon l'une des revendications 2 ou 3, **caractérisé en ce que** la prévision du mélange précurseur en matière plastique est effectuée en suivant les étapes suivantes :
i. prévision d'un premier monomélange comprenant le premier monomère de lactamine et un additif composé de l'un des deux composants alternatifs catalyseur ou activateur ;
ii. prévision d'un second monomère comprenant le premier monomère de lactame et/ou un second monomère de lactame et un additif composé de l'autre composant catalyseur ou activateur ;
iii. réunion du premier mélange monomérique et du second mélange monomérique.

5. Procédé selon l'une des revendications 3 ou 4, **caractérisé en ce que** le mélange précurseur de matière plastique est maintenu pendant une période (t_{w}), en particulier une période (t_{w}) d'au moins 10 secondes, à ou au-dessus d'une température d'attente (T_{w}) avant que la zone de connexion (16) de la pièce d'insertion (12) ne vienne pour la première fois en contact avec le mélange précurseur de plastique et que la température d'attente (T_{w}) soit au moins égale à la température de fusion de monomère (T_{M1}) et/ou, en particulier, au moins égale à la température de démarrage (T_{S}).

6. Procédé selon l'une des revendications ci-dessus, **caractérisé en ce que** le premier monomère de lactame est un caprolactame ou un laurolactame.

7. Procédé selon l'une des revendications 4 à 6, **caractérisé en ce que** le second monomère de lactame est un caprolactame ou un laurolactame.

8. Procédé selon l'une des revendications ci-dessus, **caractérisé en ce que** la première température de fusion du polymère (T_{P1}) est inférieure à une seconde / la seconde température de fusion du polymère (T_{P2}) du second matériau de polyamide.

9. Procédé selon l'une des revendications ci-dessus, **caractérisé en ce qu'**une température maximale (Tₚₘₐₓ) du mélange précurseur plastique et du second matériau polyamide se formant et formé à partir du mélange précurseur plastique au cours de la polymérisation est inférieure à une seconde/la seconde température de fusion du polymère (T_{P2}) du second matériau en polyamide.

10. Procédé selon l'une des revendications précédentes, **caractérisé en ce que** le chauffage de la zone de connexion (16) est effectué par un dispositif de chauffage placé de préférence sur ou dans l'outil de moulage.

11. Procédé selon la revendication 10, **caractérisé par le fait que** le dispositif de chauffage se trouve sur la zone de connexion (16) pendant un temps de contact (t_{K}) et est déplacé après le temps de contact (t_{K}) par rapport à la zone de connexion (16), de sorte que celui-ci est libéré au moins partiellement pour le contact avec le mélange précurseur de plastique.

12. Procédé selon l'une des revendications 10 ou 11, **caractérisé en ce qu'**une température de consigne (Tₛₒₗₗ) du dispositif de chauffage lors du chauffage de la zone de connexion (16) est inférieure de 50 °C au maximum à une seconde / la seconde température de fusion du polymère (T_{P2}) du second matériau en polyamide.
